# EUROPÄISCHE PATENTSCHRIFT

(11) **EP 0 927 662 B1**
(45) Veröffentlichungstag und Bekanntmachung des Hinweises auf die Patenterteilung: **24.07.2002**
(21) Anmeldenummer: 98119463.2
(22) Anmeldetag: 15.10.1998
(51) Int. Cl.: B60R 5/00

(54) **Transportvorrichtung, wie z.B. für Personen- oder Kombinationskraftwagen, mit einem insbesondere verkleinerbaren, zusammenlegbaren, z.B. sackartigen, Behälter**
Transport device in vehicles such as passenger or estate cars with a particularly reducable, foldable, e.g. bag like container
Dispositif de transport, comme par exemple pour voitures particulières ou breaks, avec un conteneur en particulier réductible, pliable, par exemple en forme de sac

(30) Priorität: 05.01.1998 DE 19800104
(43) Veröffentlichungstag der Anmeldung: 07.07.1999
(73) Patentinhaber: PETER BUTZ GmbH & Co Verwaltungs-KG, 40764 Langenfeld (DE)
(72) Erfinder: Sitzler, Wolfgang, 42111 Wuppertal (DE); Ledüc, Peter, 40468 Düsseldorf (DE)
(74) Vertreter: Patentanwälte Ostriga & Sonnet

(56) Entgegenhaltungen:
- DE-A- 3 738 931
- DE-A- 3 901 354
- DE-A- 19 519 507
- FR-A- 2 677 312

## Beschreibung

Die Erfindung betrifft eine Transportvorrichtung entsprechend dem Oberbegriff des Anspruchs 1. Eine solche Transportvorrichtung ist in der FR-A-2677312 beschrieben. Ferner ist eine Transportvorrichtung aus der DE 19519507C2 bekannt.

Beim praktischen Einsatz der ansonsten bewährten bekannten Transportvorrichtung ist aufgefallen, daß die Bewegungsbahn des entweder nach oben oder nach unten schwenkbaren Deckels, der dem Verschluß des Durchladekanals dient, durch im Laderaum, z.B. im Kofferraum, befindliche Gepäckstücke beeinträchtigt werden kann.

Ausgehend von der Transportvorrichtung gemäß dem Oberbegriff des Anspruchs 1, liegt der Erfindung die Aufgabe zugrunde, die bekannte Transportvorrichtung so weiterzuentwickeln, daß sich der für den Verschluß des Durchladekanals bestimmte Deckel weitestgehend ungehindert betätigen läßt.

Entsprechend der Erfindung wird diese Aufgabe durch die Merkmalskombination des Anspruchs 1 gelöst.

Dem Rahmengehäuse ist mindestens eine Führungsbahn zugeordnet, welche den Deckel verschieblich führt, so daß dieser keinen weiträumigen Schwenkraum mehr benötigt, den Gepäckstücke bewegungshindernd blockieren könnten. Wichtig dabei ist, daß sich die Führungsbahn entlang der gesamten Öffnung des Durchladekanals erstreckt, so daß der Deckel mit einer einfachen Verschiebebewegung aus seiner kopletten öffnungslage in seine Schließlage (und umgekehrt) versetzbar ist.

Von der DE 195 19 507 C2 ist es dagegen nur bekannt, den geschlossenen Deckel über einen kurzen Entriegelungshub entgegen Federkraft translatorisch zu verschieben, um auf diese Weise deckelseitige Riegelzapfen aus ihrer Verriegelungsstellung herauszubewegen und um anschließend den entriegelten Deckel in seine öffnungslage schwenken zu können.

Eine erfindungsgemäße Ausführungsform, bei welcher die Anschluß-Führungsbahn insgesamt oder auf Teilen ihrer Bahnlänge gekrümmt ist, wird dann bevorzugt, wenn der Deckel aus seiner Schließlage, in welcher sich der Deckel in einer aufrechten Lage befindet, nach oben hin in eine öffnungslage überführt werden soll. Zweckmäßig ist dabei die Anschluß-Führungsbahn zunächst schräg nach hinten und oben, sodann entlang eines gekrümmten Übergangsbereichs und schließlich entlang der Unterseite der Kofferraumdecke (z.B. unterseitig der Hutablage) bis an den Ausschnitt für den Kofferraumdeckel nach hinten geführt.

Zweckmäßig ist der Deckel plattenartig ausgebildet. Dabei weist der Deckel mindestens ein Plattenelement auf, welches beispielsweise formsteif bzw.starr ausgebildet sein kann.

Für besondere Anwendungsfälle kann es auch zweckmäßig sein, ein Plattenelement oder mehrere in Verschieberichtung unmittelbar aufeinanderfolgende Plattenelemente biegsam auszubilden. Auf diese Weise ist es möglich, daß sich der plattenartig ausgebildete biegsame Deckel entlang der Verschieberichtung auch an eine gekrümmte Führungsbahn anpassen kann.

Für den Fall, daß der Deckel, wie bereits erwähnt, mehrere Plattenelemente aufweist, kann die Anordnung erfindungsgemäß so getroffen sein, daß z.B. zwei Plattenelemente in ihrer öffnungs- und Schließbewegung jeweils gegenläufig angeordnet sind, was bei einer horizontalen Verschieberichtung besonders günstig anzuwenden ist.

Eine andere Erfindungsvariante, welche sich beispielsweise mehr dazu eignet, den Deckel in bereits erwähnter Weise aus seiner aufrechten Schließlage nach oben und sodann über eine Krümmung unterseitig z.B. der Hutablage zu führen, besteht darin, daß der Deckel eine Anzahl relativ schmaler lamellenartiger Plattenelemente aufweist, deren Längsachsen sich quer zur Verschieberichtung erstrecken. Diese lamellenartigen Plattenelemente können in vorteilhafter Weise etwa nach Art einer Jalousie an ihren Längsseiten beweglich aneinandergekuppelt und im übrigen miteinander bewegungsgekuppelt sein.

Die Führung des Deckels in der Führungsbahn kann unterschiedlich ausgestaltet sein. So ist es möglich, jedes Plattenelement entlang seines sich in Verschieberichtung erstrekkenden Randbereichs unmittelbar oder mittelbar in der Führungsbahn, dereren Querschnitt beispielsweise C- oder T-förmig sein kann, zu führen.

Eine unmittelbare Führung kann darin bestehen, daß die glatten randlichen Endbereiche eines Plattenelements unmittelbar in die kanalartige Führungsbahn eingesteckt sind.

Eine mittelbare Führung kann darin bestehen, daß jedes Plattenelement an seinem sich in Verschieberichtung erstreckenen Randbereich Führungselemente, wie Gleiter, Rollen od.dgl., aufweist.

Eine andere häufig anzuwendende erfindungsgemäße Ausführungsform kann darin bestehen, daß zwei im Parallelabstand voneinander angeordnete Führungsbahnen den plattenartigen Deckel an zwei aneinander parallelen Randbereichen mindestens mittelbar führen.

Jede Führungsbahn ist dem Rahmengehäuse zweckmäßig raumfest zugeordnet, und zwar in besonderer Ausgestaltung derart, daß jede Führungsbahn mit dem Rahmengehäuse fest verbunden ist.

Eine montagefreundliche Transportvorrichtung ergibt sich dadurch, daß jede Führungsbahn mit dem Rahmengehäuse einstükkig verbunden, wie z.B. dem Rahmengehäuse stoffschlüssig angeformt ist, so daß sich auch bei dieser Bauform eine zusammenhängende einheitliche Baugruppe ergibt.

Eine andere Ausführungsform besteht darin, daß mindestens ein aufrechter oder ein horizontaler Rahmenschenkel des Rahmengehäuses, den plattenartigen Deckel gewissermaßen in einem geschützten Raum in dessen Öffnungslage aufnehmend, verbreitert ist.

Für den Fall, daß z.B. nur ein aufrechter Rahmenschenkel des Rahmengehäuses verbreitert ist, wird der einteilige oder mehrteilige plattenartige Deckel jeweils in einer einheitlichen Öffnungs- oder Schließbewegung verschoben.

Für den Fall, daß z.B. jeder aufrechte Rahmenschenkel des Rahmengehäuses zur Aufnahme je eines Plattenelements verbreitert ist, kann z.B. ein zweiteiliger Deckel Verwendung finden, bei welchem die beiden Plattenelemente jeweils mit einer gegenläufigen bzw. gegensinnigen Verschiebung geschlossen oder geöffnet werden.

Bei einer gleichläufigen bzw. gleichsinnigen Öffnungs- oder Schließbewegung eines aus mehreren Plattenelementen bestehenden Deckels hat sich eine erfindungsgemäße Ausführungsform als zweckmäßig erwiesen, bei welcher mindestens zwei formsteife oder starre Plattenelemente in Verschieberichtung miteinander schleppverbunden sind.

Die erfindungsgemäße Transportvorrichtung bietet weiterhin die Möglichkeit, daß der Deckel eine mindestens eine Betätigungshandhabe aufweisende Betätigungsvorrichtung besitzt.

Eine zweckmäßige Ausführungsform weist einen kofferraumseitig angeordneten Deckel auf, dessen Betätigungsvorrichtung vom Fahrgastraum aus bedienbar ist.

Insbesondere - jedoch nicht ausschließlich - in Kombination mit dieser letztgenannten Ausführungsform hat sich eine andere erfindungsgemäße Ausführungsform als vorteilhaft erwiesen, bei welcher der Deckel mittels eines Schlosses, wie z.B. mittels eines schlüsselbetätigten Zylinderschlosses, in seiner Schließlage abschließbar ist. Vornehmlich für den Fall, daß der Deckel nur vom Fahrgastraum aus zu bedienen ist, verhindert ein im Fahrgastraum angeordnetes Schloß einen unerwünschten Zugang zum Kofferraum.

Eine baulich einfache Anbringung einer Schließvorrichtung ist dadurch gekennzeichnet, daß diese auf die Betätigungsvorrichtung einwirkt.

Weiterhin bietet die erfindungsgemäße Transportvorrichtung die vorteilhafte Möglichkeit einer Fernbetätigung. Diese kann darin bestehen, daß der Deckel mittels mechanischer Getriebelemente, wie z.B. mittels Gestänge, Seilzüge oder Druckfluidmittel, fernbetätigbar ist.

Eine andere Erfindungsvariante besteht darin, daß dem Rahmengehäuse ein den Deckel betätigender, insbesondere fernbetätigbarer, elektromechanischer Antrieb zugeordnet ist. In diesem Zusammenhang können beispielsweise elektromechanische Antriebe Verwendung finden, die ähnlich aufgebaut sind wie elektrische Fensterheber-Antriebe.

In den Zeichnungen sind bevorzugte Ausführungsbeispiele entsprechend der Erfindung dargestellt, es zeigt,
Fig. 1 eine räumliche schematische Darstellung eines Teils eines Kofferraums eines Kombinationskraftwagens mit der rückwärtigen Ansicht einer Transportvorrichtung,
Fig. 2 einen vertikalen Teilschnitt durch eine Transportvorrichtung einer von Fig. 1 abweichenden Ausführungsform,
Fig. 3 einen Horizontalschnitt etwa in Anlehnung an die in Fig. 2 mit III-III bezeichnete Schnittlinie in der Öffnungslage eines einen Durchladekanal verschließenden Deckels,
Fig. 4 in Anlehnung an den Horizontalschnitt gemäß Fig. 3 den Deckel in seiner Öffnungslage und
Fig. 5 eine vergrößerte Detaildarstellung etwa entsprechend der in Fig. 2 mit V bezeichneten Einkreisung.

Unabhängig von Besonderheiten der jeweiligen Ausführungsform ist in den Zeichnungen eine jede Transportvorrichtung insgesamt mit der Bezugsziffer 10 versehen. Gleiche oder analoge Bauteile tragen dieselben Bezugsziffern.

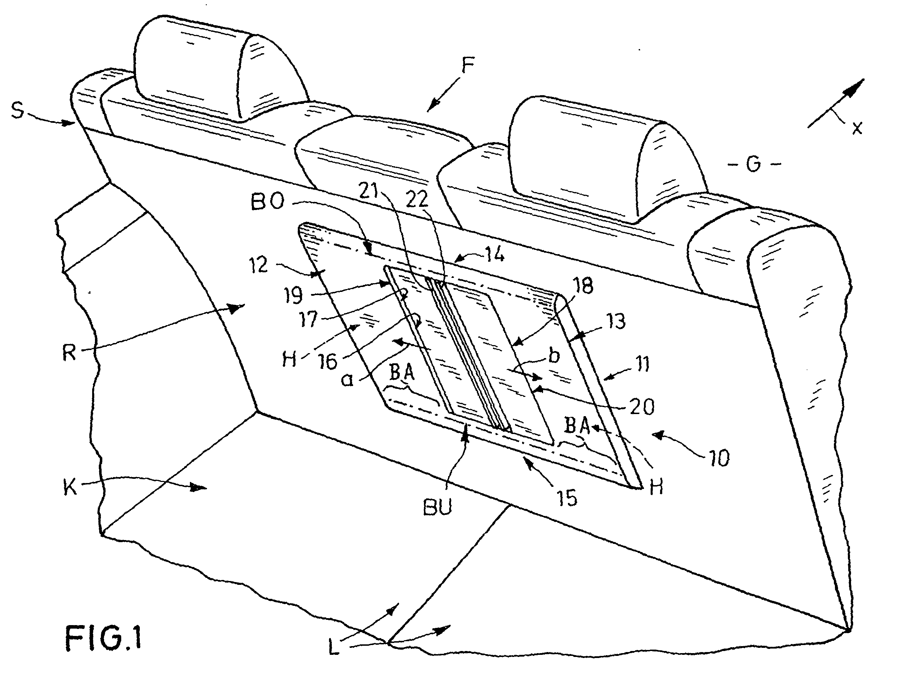

Gemäß Fig. 1 ist die Transportvorrichtung 10, die ein Rahmengehäuse 11 aufweist, an der entgegen der Fahrtrichtung x nach hinten weisenden rückwärtigen Fläche R einer durchgehenden Sitzlehne S einer Fondsitzreihe F eines Kombinationskraftwagens angeordnet. Der Lade- bzw. Kofferraum sind mit K, der Boden des letzteren mit L und der Fahrgastraum mit G bezeichnet.

Das Rahmengehäuse 11 der Transportvorrichtung 10 weist zwei entgegen der Fahrtrichtung x geneigte aufrechte Rahmenschenkel 12, 13 sowie zwei horizontale Rahmenschenkel 14 (oberer horizontaler Rahmenschenkel) und 15 (unterer horizontaler Rahmenschenkel) auf.

Das Rahmengehäuse 11 umgrenzt die Öffnung 16 eines Durchladekanals 17, in welchen bei Öffnungslage eines Deckels 18 langgestrecktes Ladegut, wie z.B. Ski, eingeschoben werden kann.

Der Deckel 18 ist zweiteilig ausgebildet und weist zwei formsteife bzw. starre Plattenelemente 19, 20 auf, welche entlang der dick strichpunktiert angedeuteten, im Parallelabstand voneinander angeordneten Führungsbahnen BO (obere Führungsbahn) und BU (untere Führungsbahn) in der Haupterstrekkungsebene des jeweiligen Plattenelements 19, 20 translatorisch verschieblich angeordnet sind. Hierbei sind die Bewegungs- bzw. Verschieberichtungen entsprechend den in Fig. 1 eingetragenen Pfeilen mit a und mit b angegeben. Die Führungsbahnen BO, BU enthalten jeweils sich außerhalb der öffnung 16 des Durchladekanals 17 erstreckende Anschluß-Führungsbahnen BA, die den gesamten Deckel 18 bzw. die jeweiligen Plattenelemente 19, 20 in seiner bzw. in ihrer Öffnungslage aufnehmen können.

Die Bewegungsrichtungen zu ihrer Schließlage und zu ihrer öffnungslage der beiden Plattenelemente 19, 20 sind gegenläufig bzw. gegensinnig.

In Fig. 1 ist der Deckel 18 in seiner Schließlage dargestellt. Wenn der Deckel 18 geöffnet werden soll, muß das Plattenelement 19 nach links in Richtung a verschoben werden, während das Plattenelement 20 nach rechts in Richtung b verschoben werden muß. Die Handhabung der beiden Plattenelemente 19, 20 geschieht beim Ausführungsbeispiel gemäß Fig. 1 mittels zweier Griffleisten 21 (für das Plattenelement 19) und 22 (für das Plattenelement 20).

Das Rahmengehäuse 11, also auch dessen aufrechte Rahmenschenkel 12, 13, bilden im Bereich der Anschluß-Führungsbahnen BA jeweils einen Hohlraum H, der so bemessen ist, daß er die Plattenelemente 19, 20 in Öffnungslage des Deckels 18, vor Einflüssen aus dem Kofferraum K geschützt, aufnehmen kann.

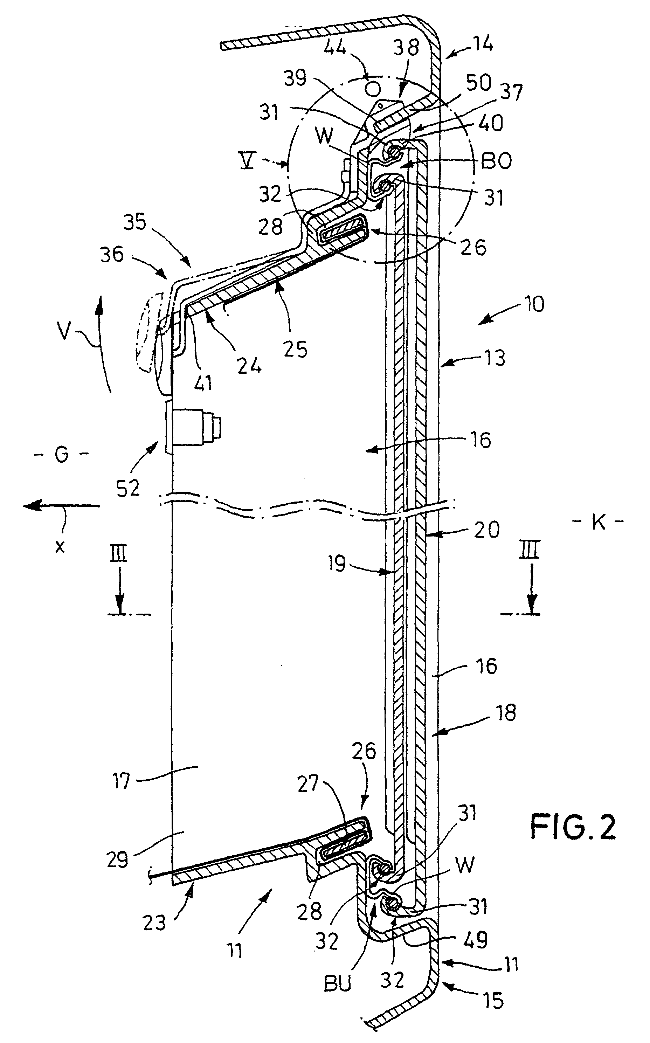

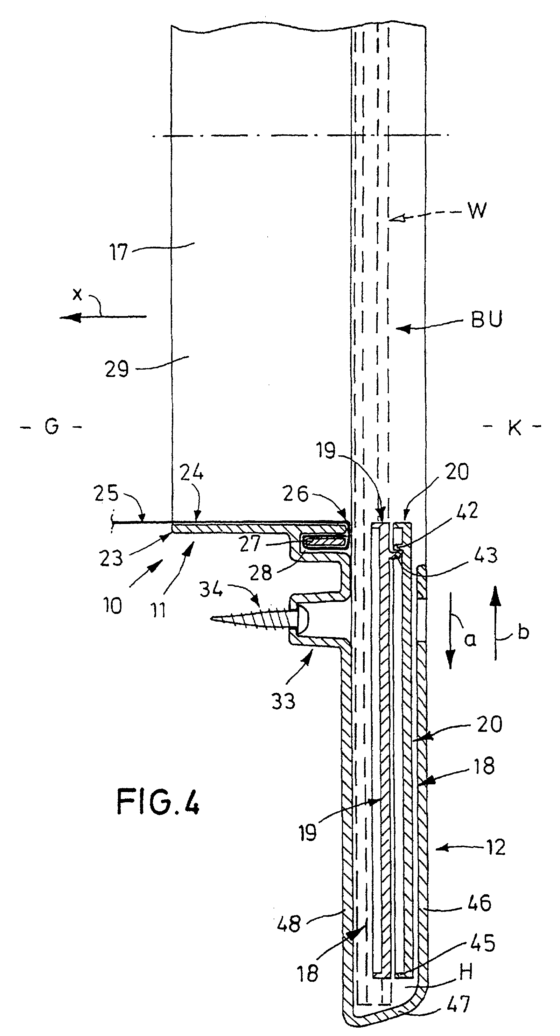

Im Unterschied zu der in Fig. 1 dargestellten Ausführungsform weist die Ausführungsform entsprechend den Fig. 2-5 nur einen verbreiterten aufrechten Rahmenschenkel 12 auf, dessen Hohlraum H so bemessen ist, daß er die Plattenelemente 19, 20 des Deckels 18, die in dessen öffnungslage doppellagig angeordnet sind, aufnehmen kann (s. Fig. 4).

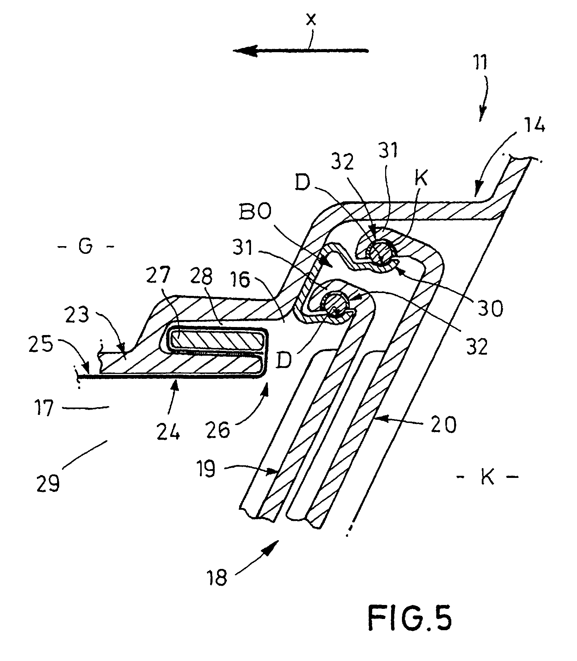

Aus zeichnerischen Gründen sind in Fig. 2 die Haupterstreckungsebenen der Plattenelemente 19, 20 nicht geneigt (vgl. aber Fig. 1 und 5) sondern senkrecht dargestellt.

Funktion und Aufbau der Transportvorrichtung 10 sollen nun anhand der Fig. 2-5 wie folgt beschrieben werden:

Das Rahmengehäuse 11 der Transportvorrichtung 10 ist in nicht näher gezeigter Weise innerhalb eines Ausschnitts z.B. der rückwärtigen Fläche R einer Sitzlehne S (vgl. Fig. 1) befestigt. Das Rahmengehäuse 11 weist einen etwa zargenförmigen Ansatz 23 auf, an dessen etwa schachtartiger Innenfläche 24 sich ein einfaltbarer textiler Behältersack 20 (jeweils nur teilweise dargestellt) abstützt.

Der hintere Rand 26 des Behältersacks 25 ist mit einem umlaufenden Klemmrahmen 27 verbunden, welcher in einer ebenfalls umlaufenden Klemmnut 28 aufgenommen ist. Der vom zargenförmigen Ansatz 23 umschlossene Aufnahmeraum 29 bildet einen Stauraum für den eingefalteten (nicht dargestellt) Behältersack 25.

Obere und untere Führungsbahn BO und BU bestehen jeweils aus am oberen horizontalen Rahmenschenkel 14 und am unteren horizontalen Rahmenschenkel 15 befestigten stählernen Walzprofil-Paaren W, welche horizontale Rillen D für Kugeln 30 von jeweils in Stegen 31 der Plattenelemente 19, 20 befestigten Kugelführungen 32 bilden. Die Rillen D sind so angeordnet, daß die beiden Plattenelemente in zwei bezüglich der Fahrtrichtung x zueinander versetzten Ebenen bewegt werden können.

Das gesamte Rahmengehäuse 11 stellt ein einstückig-stoffschlüssig zusammenhängendes Kunststoff-Spritzgußteil dar (s. Fig. 4). Gemäß Fig. 4 bildet der aufrechte Rahmenschenkel 12 eine Befestigungsaufnahme 33 für eine in der Sitzlehne S zu befestigende Schraube 34.

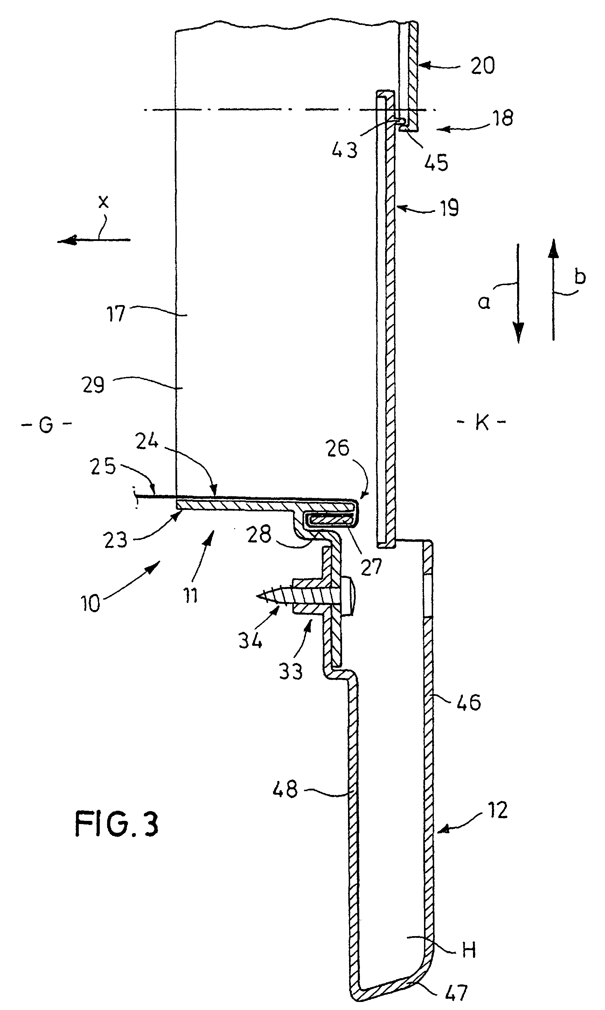

Gemäß Fig. 3 kann indessen entsprechend einer alternativen Ausführungsform der aufrechte Rahmenschenkel 12 ein gesondertes Bauteil bilden, welches mittels der Befestigungsschraube 34 mit dem übrigen Rahmengehäuse 11 verbunden ist.

Sowohl gemäß Fig. 3 als auch gemäß Fig. 4 ist der Hohlraum H von einer Rückwand 46, einer schmalen Seitenwand 47 und von einer Vorderwand 48 begrenzt.

Zweckmäßig kann der Hohlraum H auch durch eine untere Schmalwand 49 und durch eine obere Schmalwand 50 abgeschlossen sein, so daß der Hohlraum H praktisch nur an seiner Zugangsöffnung 51 einseitig offen ist.

Eine Betätigungsvorrichtung 35 weist als Betätigungshandhabe einen vom Fahrgastraum G bedienbaren Hebel 36 aus federndem Werkstoff auf, welcher innerhalb eines Horizontalschlitzes 37 des oberen horizontalen Schenkels 14 in den Richtungen a und b beweglich angeordnet ist und dazu mittels eines etwa gabelförmigen Gleitansatzes 38 an einer Gleitrippe 39 (Teil der oberen Schmalwand 50) des oberen horizontalen Rahmenschenkels 14 geführt ist.

Über einen Kupplungsansatz 40 ist der Gleitansatz 38 mit dem Steg 31 des Plattenelements 20 bezüglich der Verschieberichtungen a, b bewegungsgekuppelt.

Wenn der Deckel 18 gemäß Fig. 2 aus der dort dargestellten Schließlage (vgl. ebenfalls Fig. 3) in seine öffnungslage gemäß Fig. 4 versetzt werden soll, wird der Schwenkhebel 36 in Richtung v angehoben und dabei außer Eingriff mit einer Rastausnehmung 41 versetzt, die im zargenförmigen Ansatz 23 vorgesehen ist. Sodann wird der Schwenkhebel 36 in Richtung a so weit verschoben, bis der innere Mitnehmeransatz 42 des Plattenelements 20 außen gegen den Mitnehmeransatz 43 des Plattenelements 19 stößt und dieses in Richtung a so weit mitnimmt, bis die öffnungslage gemäß Fig. 4 erreicht ist.

Die öffnungsbewegung in Richtung a geschieht entgegen der Rückstellkraft einer am gabelförmigen Gleitansatz 38 angreifenden Zugfeder 44. Zur Bedienungserleichterung kann eine der Rastausnehmung 41 analoge, bezüglich letzterer in Richtung a querversetzte nicht gezeigte Rastausnehmung vorgesehen sein, welche den Schwenkhebel 36 in der öffnungslage des Deckels 18 sichert.

Wenn umgekehrt der Deckel 18 geschlossen werden soll, wird der Schwenkhebel 36 erneut ausgerastet. Die Zugfeder 44 verschiebt sodann den gabelförmigen Gleitansatz 38, und damit auch das Plattenelement 20, so weit in Richtung b, bis der äußere Mitnehmeransatz 45 des Plattenelements 20 von innen her gegen den Mitnehmeransatz 43 des Plattenelements 19 schlägt und letzteres in die Schließlage gemäß Fig. 3 (vgl. Fig. 2) mitnimmt.

Die Mitnehmeransätze 42, 45 des Plattenelements 20 sowie der Mitnehmeransatz 43 des Plattenelements 19 bilden somit zwischen beiden Plattenelementen 19, 20 eine in beiden translatorischen Verschieberichtungen a, b wirksame Schleppverbindung.

Die Funktion der Betätigungsvorrichtung 35 kann in nicht näher dargestellter Weise durch ein Zylinderschloß 52 unterbunden werden.

## Patentansprüche

1. Transportvorrichtung (10), für Personen- oder Kombinationskraftwagen, mit einem verkleinerbaren, zusammenlegbaren Behälter (25) und mit einem letzteren haltenden Rahmengehäuse (11), welches einen Durchladekanal (17) umschließt, der mittels mindestens eines relativ zum Rahmengehäuse (11) beweglichen, mindestens ein Plattenelement (19, 20) aufweisenden plattenartigen Deckels (18) verschließbar ist, wobei dem Rahmengehäuse (11) mindestens eine Führungsbahn (BO, BU) zugeordnet ist, welche sich zumindest entlang der gesamten Öffnung (16) des Durchladekanals (17) erstreckt, welche den Deckel (18) zwischen seiner Öffnungslage und seiner Schließlage verschieblich führt, und welche eine sich außerhalb der Öffnung (16) des Durchladekanals (17) erstreckende Anschluß-Führungsbahn (BA) enthält, die zumindest den gesamten Deckel (18) in seiner Öffnungslage aufnimmt, **dadurch gekennzeichnet, daß** jedes Plattenelement (19, 20) entlang seines sich in Verschieberichtung (a, b) erstreckenden Randbereichs in der Führungsbahn (BO, BU) geführt ist, und daß jedes Plattenelement (19, 20) an seinem sich in Verschieberichtung (a, b) erstreckenden Randbereich Führungselemente (32), wie Gleiter, Rollen od.dgl., aufweist.

2. Transportvorrichtung Anspruch 1, **dadurch gekennzeichnet, daß** die Anschluß-Führungsbahn (BA) insgesamt oder auf Teilen ihrer Länge gekrümmt ist.

3. Transportvorrichtung nach einem der Anspruch 1 oder nach Anspruch 2, **dadurch gekennzeichnet, daß** jedes Plattenelement (19, 20) formsteif oder starr ausgebildet ist.

4. Transportvorrichtung nach einem der Ansprüche 1 bis 3, **dadurch gekennzeichnet, daß** jedes Plattenelement entlang der Verschieberichtung (a, b) biegsam ausgebildet ist.

5. Transportvorrichtung nach einem der Ansprüche 1 bis 4, **dadurch gekennzeichnet, daß** der Deckel (18) mehrere Plattenelemente (19, 20) aufweist.

6. Transportvorrichtung nach Anspruch 5, **dadurch gekennzeichnet, daß** der Deckel eine Anzahl relativ schmaler lamellenartiger Plattenelemente aufweist, deren Längsachsen sich quer zur Verschieberichtung (a, b) erstrecken.

7. Transportvorrichtung nach Anspruch 6, **dadurch gekennzeichnet, daß** die lamellenartigen Plattenelemente an ihren sich quer zur Verschieberichtung (a, b) erstreckenden Längsseiten beweglich aneinandergekuppelt sind.

8. Transportvorrichtung nach einem der Ansprüche 1 bis 7, **gekennzeichnet durch** zwei im Parallelabstand voneinander angeordnete Führungsbahnen (BO, BU), welche den plattenartigen Deckel (18) an zwei einander parallelen Randbereichen (31) mindestens mittelbar führen.

9. Transportvorrichtung nach einem der Ansprüche 1 bis 8, **dadurch gekennzeichnet, daß** jede Führungsbahn sich zumindest mit einer Teilbahn aufrecht neben der Öffnung (16) des Durchladekanals (17) erstreckt.

10. Transportvorrichtung nach einem der Ansprüche 1 bis 9, **dadurch gekennzeichnet, daß** jede Führungsbahn (BO, BU) sich zumindest mit einer Teilbahn etwa horizontal neben der Öffnung (16) des Durchladekanals (17) erstreckt.

11. Transportvorrichtung nach einem der Anprüche 1 bis 10, **dadurch gekennzeichnet, daß** jede Führungsbahn (BO, BU) dem Rahmengehäuse (11) raumfest zugeordnet ist.

12. Transportvorrichtung nach Anspruch 11, **dadurch gekennzeichnet, daß** jede Führungsbahn (BO, BU) mit dem Rahmengehäuse (11) fest verbunden ist.

13. Transportvorrichtung nach Anspruch 11 oder nach Anspruch 12, **dadurch gekennzeichnet, daß** jede Führungsbahn (BO, BU) mit dem Rahmengehäuse (11) einstückig verbunden ist.

14. Transportvorrichtung nach Anspruch 13, **dadurch gekennzeichnet, daß** jede Führungsbahn (BO, BU) dem Rahmengehäuse (11) stoffschlüssig angeformt ist.

15. Transportvorrichtung nach einem der Ansprüche 1 bis 14, **dadurch gekennzeichnet, daß** mindestens ein aufrechter (12, 13) oder ein horizontaler (14, 15) Rahmenschenkel des Rahmengehäuses (11), den plattenartigen Deckel (18) in dessen Öffnungslage aufnehmend, verbreitert ist.

16. Transportvorrichtung nach Anspruch 15, **dadurch gekennzeichnet, daß** jeder aufrechte Rahmenschenkel (12, 13) des Rahmengehäuses (11) zur Aufnahme je mindenstens eines Plattenelements (19, 20) verbreitert ist.

17. Transportvorrichtung nach einem der Ansprüche 1 bis 16, **gekennzeichnet durch** mindestens zwei in Verschieberichtung (a, b) miteinander schleppverbundene formsteife oder starre Plattenelemente (19, 20).

18. Transportvorrichtung nach einem der Ansprüche 1 bis 17, **dadurch gekennzeichnet, daß** der Deckel (18) eine mindestens eine Betätigungshandhabe (36) aufweisende Betätigungsvorrichtung (35) besitzt.

19. Transportvorrichtung nach Anspruch 18, **gekennzeichnet durch** einen kofferraumseitig angeordneten Deckel (18), dessen Betätigungsvorrichtung (35) vom Fahrgastraum (G) aus bedienbar ist.

20. Transportvorrichtung nach einem der Ansprüche 1 bis 19, **dadurch gekennzeichnet, daß** der Deckel (18) mittels eines Schlosses, wie z.B. mittels eines schlüsselbetätigten Zylinderschlosses (52), in seiner Schließlage abschließbar ist.

21. Transportvorrichtung nach Anspruch 19 oder nach Anspruch 20, **dadurch gekennzeichnet, daß** das Schloß (52) auf die Betätigungsvorrichtung (35) einwirkt.

22. Transportvorrichtung nach einem der Ansprüche 1 bis 21, **dadurch gekennzeichnet, daß** der Deckel (18) mittels mechanischer Getriebeelemente, wie z.B. mittels Gestänge, Seilzüge oder Druckfluidmittel, fernbetätigbar ist.

23. Transportvorrichtung nach einem der Ansprüche 1 bis 21, **dadurch gekennzeichnet, daß** dem Rahmengehäuse (11) ein den Deckel (18) betätigender, insbesondere fernbetätigbarer elektromechanischer Antrieb zugeordnet ist.

## Claims

1. A transport device (10) for passenger or estate cars, having a reducible, foldable container (25) and having a frame housing (11), which holds said container and surrounds a through-load channel (17), which may be closed by means of at least one plate-type cover (18) which is movable relative to the frame housing (11) and has at least one plate element (19, 20), there being associated with the frame housing (11) at least one guide track (BO, BU) which extends at least along the entire opening (16) of the through-load channel (17) and guides the cover (18) displaceably between its open position and its closed position, and which contains a connecting guide track (BA), which extends outside the opening (16) of the through-load channel (17) and receives at least the entire cover (18) in its open position, **characterised in that** each plate element (19, 20) is guided in the guide track (BO, BU) along its edge region extending in the displacement direction (a, b), and that each plate element (19, 20) has guide elements (32), such as slide means, rollers or the like, along its edge region extending in the displacement direction (a, b).

2. A transport device according to Claim 1, **characterised in that** the connecting guide track (BA) is curved over all, or parts of, its length.

3. A transport device according to Claim 1 or according to Claim 2, **characterised in that** each plate element (19, 20) is of a dimensionally stable or rigid construction.

4. A transport device according to one of Claims 1 to 3, **characterised in that** each plate element is constructed to be flexible in the displacement direction (a, b).

5. A transport device according to one of Claims 1 to 4, **characterised in that** the cover (18) has a plurality of plate elements (19, 20).

6. A transport device according to Claim 5, **characterised in that** the cover has a number of relatively narrow lamellar plate elements, whereof the longitudinal axes extend transversely to the displacement direction (a, b).

7. A transport device according to Claim 6, **characterised in that** the lamellar plate elements are movably coupled together at their longitudinal sides extending transversely to the displacement direction (a, b).

8. A transport device according to one of Claims 1 to 7, **characterised by** two guide tracks (BO, BU), which are arranged at a mutual parallel spacing and guide the plate-type cover (18), at least indirectly, along two mutually parallel edge regions (31).

9. A transport device according to one of Claims 1 to 8, **characterised in that** at least part of each guide track extends vertically near to the opening (16) of the through-load channel (17).

10. A transport device according to one of Claims 1 to 9, **characterised in that** at least part of each guide track (BO, BU) extends horizontally near to the opening (16) of the through-load channel (17).

11. A transport device according to one of Claims 1 to 10, **characterised in that** each guide track (BO, BU) is associated with the frame housing (11) in stabilised manner.

12. A transport device according to Claim 11, **characterised in that** each guide track (BO, BU) is fixedly connected to the frame housing (11).

13. A transport device according to Claim 11 or according to Claim 12, **characterised in that** each guide track (BO, BU) is connected to the frame housing (11) in one piece.

14. A transport device according to Claim 13, **characterised in that** each guide track (BO, BU) is integrally formed on the frame housing (11) with material fit.

15. A transport device according to one of Claims 1 to 14, **characterised in that** at least one vertical (12, 13) or horizontal (14, 15) frame limb of the frame housing (11) is widened, receiving the plate-type cover (18) in its open position.

16. A transport device according to Claim 15, **characterised in that** each vertical frame limb (12, 13) of the frame housing (11) is widened to receive in each case at least one plate element (19, 20).

17. A transport device according to one of Claims 1 to 16, **characterised by** at least two dimensionally stable or rigid plate elements (19, 20) which are connected together such that one pulls the other in the displacement direction (a, b).

18. A transport device according to one of Claims 1 to 17, **characterised in that** the cover (18) has an actuating device (35) having at least one actuating handle (36).

19. A transport device according to Claim 18, **characterised by** a cover (18) which is arranged on the boot side and whereof the actuating device (35) may be operated from the passenger area (G).

20. A transport device according to one of Claims 1 to 19, **characterised in that** the cover (18) may be locked in its closed position by means of a lock, for example by means of a key-actuated cylinder lock (52).

21. A transport device according to Claim 19 or according to Claim 20, **characterised in that** the lock (52) acts on the actuating device (35).

22. A transport device according to one of Claims 1 to 21, **characterised in that** the cover (18) may be remote-controlled by means of mechanical transmission elements, for example by means of a linkage, cable pulls or hydraulic fluid.

23. A transport device according to one of Claims 1 to 21, **characterised in that** a drive, in particular a remote-controlled electromechanical drive, actuating the cover (18) is associated with the frame housing (11).

## Revendications

1. Dispositif de transport (10), pour des voitures particulières ou breaks, avec un conteneur (25) réductible, pliable, et avec un boîtier de cadre (11) maintenant ce dernier, entourant un canal de chargement traversant (17), pouvant être fermé à l'aide d'au moins un couvercle (18) sous forme de plaque, mobile par rapport au boîtier de cadre (11), présentant au moins un élément de plaque (19, 20), au boîtier de cadre (11) étant associée au moins une piste de guidage (BO, BU) s'étendant au moins le long de l'ensemble de l'ouverture (16) du canal de chargement traversant (17), guidant avec mobilité le couvercle (18) entre sa position d'ouverture et sa position de fermeture et contenant une piste de guidage de raccordement (BA) s'étendant à l'extérieur de l'ouverture (16) du canal de chargement traversant (17), piste recevant à sa position d'ouverture au moins l'ensemble du couvercle (18), **caractérisé en ce que** chaque élément de plaque (19, 20) est guidé le long de sa zone de bordure, s'étendant dans la direction de déplacement (a, b) dans la piste de guidage (BO, BU), et **en ce que** chaque élément de plaque (19, 20) présente, sur sa zone de bordure, s'étendant dans la direction de déplacement (a, b), des éléments de guidage (32), tels que des patins de glissement, des galets ou analogues.

2. Dispositif de transport selon la revendication 1, **caractérisé en ce que** la piste de guidage de raccordement (BA) est incurvée globalement ou sur des parties de sa longueur.

3. Dispositif de transport selon la revendication 1 ou la revendication 2, **caractérisé en ce que** chaque élément formant plaque (19, 20) présente une rigidité de forme ou est configuré rigidement.

4. Dispositif de transport selon l'une des revendications 1 à 3, **caractérisé en ce que** chaque élément formant plaque est flexible le long de la direction de déplacement (a, b).

5. Dispositif de transport selon l'une des revendications 1 à 4, **caractérisé en ce que** le couvercle (18) présente plusieurs éléments formant plaque (19, 20).

6. Dispositif de transport selon la revendication 5, **caractérisé en ce que** le couvercle présente des éléments formant plaque du genre de lamelles, relativement plus étroits, dont les axes longitudinaux s'étendent transversalement par rapport à la direction de déplacement (a, b).

7. Dispositif de transport selon la revendication 6, **caractérisé en ce que** les éléments formant plaque du genre de lamelles sont couplés les uns aux autres de façon mobile sur leurs côtés longitudinaux s'étendant transversalement par rapport à la direction de déplacement (a, b).

8. Dispositif de transport selon l'une des revendications 1 à 7, **caractérisé par** deux pistes de guidage (BO, BU), disposées à distance l'une de l'autre et parallèlement, guidant au moins indirectement le couvercle (18) du genre d'une plaque sur deux zones de bordure (31) parallèles entre elles.

9. Dispositif de transport selon l'une des revendications 1 à 8, **caractérisé en ce que** chaque piste de guidage s'étend au moins avec une piste partielle montante, à côté de l'ouverture (16) du canal de chargement traversant (17).

10. Dispositif de transport selon l'une des revendications 1 à 9, **caractérisé en ce que** chaque piste de guidage (BO, BU) s'étend au moins avec une piste partielle à peu près horizontalement à côté de l'ouverture (16) du canal de chargement traversant (17).

11. Dispositif de transport selon l'une des revendications 1 à 10, **caractérisé en ce que** chaque piste de guidage (BO, BU) est associée de façon spatialement fixe au boîtier de cadre (11).

12. Un dispositif de transport selon la revendication 11, **caractérisé en ce que** chaque piste de guidage (BO, BU) est reliée rigidement au boîtier de cadre (11).

13. Dispositif de transport selon la revendication 11 ou selon la revendication 12, **caractérisé en ce que** chaque piste de guidage (BO, BU) est reliée d'une seule pièce au boîtier de cadre (11).

14. Dispositif de transport selon la revendication 13, **caractérisé en ce que** chaque piste de guidage (BO, BU) est formée d'un seul tenant par une liaison par la matière sur le boîtier de cadre (11).

15. Dispositif de transport selon l'une des revendications 1 à 14, **caractérisé en ce qu'**au moins une branche de cadre montante (12, 13), ou bien horizontale (14, 15) du boîtier de cadre (11), est élargie, en recevant le couvercle (18) du genre d'une plaque lorsqu'il est à sa position d'ouverture.

16. Dispositif de transport selon la revendication 15, **caractérisé en ce que** chaque branche de cadre (12, 13) montante du boîtier de cadre (11) est élargie pour recevoir chaque fois au moins un élément formant plaque (19, 20).

17. Dispositif de transport selon l'une des revendications 1 à 16, **caractérisé par** au moins deux éléments formant plaque (19, 20), à rigidité de forme ou rigides, reliés ensemble par remorquage dans la direction de déplacement (A, B).

18. Dispositif de transport selon l'une des revendications 1 à 17, **caractérisé en ce que** le couvercle (18) comporte un dispositif d'actionnement (35) présentant au moins une manette d'actionnement (36).

19. Dispositif de transport selon la revendication 18, **caractérisé par** un couvercle (18) disposé côté coffre à bagages, dont le dispositif d'actionnement (35) est manoeuvrable depuis l'habitacle (G).

20. Dispositif de transport selon l'une des revendications 1 à 19, **caractérisé en ce que** le couvercle (18) est susceptible d'être fermé à sa position de fermeture au moyen d'une serrure, tel que par exemple au moyen d'une serrure à cylindre (52) actionnée par clé.

21. Dispositif de transport selon la revendication 19 ou la revendication 20, **caractérisé en ce que** la serrure (52) agit sur le dispositif d'actionnement (35).

22. Dispositif de transport selon l'une des revendications 1 à 21, **caractérisé en ce que** le couvercle (18) peut être actionné à distance à l'aide d'éléments de mécanismes mécaniques, tel que par exemple à l'aide d'une tringlerie, de câbles de traction ou à l'aide de moyens à fluide sous pression.

23. Dispositif de transport selon l'une des revendications 1 à 21, **caractérisé en ce qu'**un entraînement électromécanique, en particulier pouvant être actionné à distance, actionnant le couvercle (18), est associé au boîtier de cadre (11).
